# NEUE EUROPÄISCHE PATENTSCHRIFT

(11) **EP 1 921 955 B2**
(45) Veröffentlichungstag und Bekanntmachung des Hinweises auf die Entscheidung über den Einspruch: **07.03.2018**
(45) Hinweis auf die Patenterteilung: 16.12.2009
(21) Anmeldenummer: 06777784.7
(22) Anmeldetag: 14.07.2006
(51) Int. Cl.: A47J 42/08

(54) **ELEKTROMOTORISCHES KÜCHENGERÄT MIT ELEKTRISCHER ODER ELEKTRONISCHER VERRIEGELUNG**
ELECTRIC-MOTOR KITCHEN APPLIANCE COMPRISING AN ELECTRIC OR ELECTRONIC CONTROL
APPAREIL DE CUISINE À MOTEUR ÉLECTRIQUE À VERROUILLAGE ÉLECTRIQUE OU ÉLECTRONIQUE

(30) Priorität: 17.08.2005 DE 102005038919
(43) Veröffentlichungstag der Anmeldung: 21.05.2008
(73) Patentinhaber: BSH Hausgeräte GmbH, 81739 München (DE)
(72) Erfinder: MAK, Marjan, 3309 Gomilsko (SI); OGRIZEK, Darko, 3320 Velenje (SI); SEDOVSEK, Aleksander, 3330 Mozirje (SI); SEMEJA, Uros, 3327 Smartno Ob Paki (SI)
(86) Internationale Anmeldenummer: PCT/EP2006/064269
(87) Internationale Veröffentlichungsnummer: WO 2007/020143

(56) Entgegenhaltungen:
- EP-A- 1 529 472
- EP-A2- 0 524 708
- WO-A1-92/19905
- WO-A1-02/102219
- DE-A1- 2 011 816
- DE-A1- 2 802 155
- DE-A1- 3 233 516
- DE-A1- 4 207 772
- GB-A- 1 222 175
- JP-A- S 488 466
- JP-A- H10 162 677
- US-A- 5 583 386

## Beschreibung

Die Erfindung betrifft ein elektromotorisches Küchengerät, insbesondere elektromotorisches Handgerät, vorzugsweise Stabmixer, mit einem Einschalter, sowie ein Verfahren zum Ein-/Ausschalten eines Küchengerätes.

Aus der DE 42 20 233 ist ein Haushaltsgerät zum Bearbeiten von Lebensmitteln bekannt, welches einen Elektromotor und einen elektrischen Akkumulator enthält, wobei der Akkumulator aufgeladen wird, indem das Haushaltsgerät in eine Ladestation gestellt wird.

Die DE 28 02 155 A1 offenbart ein Handmixergerät, welches von einem Elektromotor angetrieben wird. Die US 1 222 175 A offenbart eine Küchenmaschine, welche mit unterschiedlichen Drehzahlen betrieben werden kann. Die DE 32 33 516 A1 beschreibt ein Haushaltsgerät mit einer Drehzahl-Einstelleinrichtung, wobei ein Entriegelungsschieber vorgesehen ist, welcher derart eingerichtet ist, bereits gedrückte Geschwindigkeitswahlschalter entsprechend zu entriegeln. Auch die EP 1 529 472 A offenbart ebenfalls einen Handmixer, der mit Hilfe eines Elektromotors angetrieben wird.

Nachteilig bei bekannten elektromotorischen Küchengeräten ist eine gewisse Gefahr, dass das Küchengerät durch zufälliges und unbeabsichtigtes Drücken eines Einschalters angeschaltet wird. Dieses Problem stellt sich insbesondere bei Stabmixern, welche im freien Raum rotierende Schneidmesser bzw. ein rotierendes Pürierwerk an ihrem Werkzeugkopf aufweisen. Diese scharfen Messer können funktionsbedingt nicht durch eine Abdeckhaube geschützt werden. Durch unbeabsichtigtes Betätigen des Einschalters können die Schneidmesser Verletzungen bei einem Nutzer des Stabmixers verursachen.

Es ist daher Aufgabe der vorliegenden Erfindung, ein elektromotorisches Küchengerät bereitzustellen, von welchem ein geringeres Verletzungspotential ausgeht.

Diese Aufgabe wird erfindungsgemäß durch das elektromotorische Küchengerät gemäß Patentanspruch 1 gelöst. Weitere vorteilhafte Ausgestaltungen, die jeweils einzeln angewandt oder beliebig miteinander kombiniert werden können, sind Gegenstand der jeweilig abhängigen Ansprüche.

Das elektromotorische Küchengerät, insbesondere ein elektromotorisches Handgerät, vorzugsweise ein Stabmixer, mit einem Einschalter weist eine fingerbetätigbare elektrische Verriegelung für den Einschalter auf.

Mit der elektrischen Verriegelung wird der Einschalter blockiert bzw. seine Betätigung wirkungslos, wenn die Verriegelung nicht freigegeben ist. Um das Küchengerät zu betreiben, muss der Benutzer die Verriegelung zunächst lösen bzw. freigeben und dann das Küchengerät anschalten. Fingerbetätigbar bedeutet, dass die Verrieglung geeignet und bestimmt ist, mit einem Finger des Benutzers betätigt zu werden. Hierfür ist insbesondere ein Schalter vorgesehen, der mit dem Finger betätigt werden kann. Elektromotorische Küchengeräte wie z.B. Universal-Küchenmaschinen, Standmixer, Universalzerkleinerer, Stabmixer, Handrührer, oder Allesschneider verwenden im Gegensatz zu thermischen Küchengeräten wie z.B. Espresso/Kaffee Voll- oder Halbautomaten, Toaster, Eierkocher, Wasserkocher, Fritteusen, Waffeleisen, Kontakt-, Tisch- oder Terrassengrill, Bügeleisen oder Dampfstationen einen Elektromotor, um eine bestimmte gewünschte Wirkung zu erzielen. Ein solches Küchengerät weist insbesondere rotierende Messer und/oder Schneiden auf.

Die Verriegelung weist erfindungsgemäß einen von dem Einschalter separaten Sicherheitsschalter auf. Der Sicherheitsschalter ist manuell betätigbar. Er ist geeignet und bestimmt, um von einem Benutzer des Küchengerätes bedient zu werden. Der Sicherheitsschalter ist insbesondere in einer Vertiefung angeordnet, so dass ein unbeabsichtigtes Drücken des Sicherheitsschalters, beispielsweise durch Drücken mit einer Handfläche, erschwert wird. Hierdurch wird beispielsweise verhindert, dass ein Kind den Stabmixer durch Drücken des Sicherheitsschalters und des Einschalters mit der bloßen Handfläche anschalten kann.

Der Sicherheitsschalter ist insbesondere in einer Nähe von weniger als 4 cm, insbesondere weniger als 3 cm, vorzugsweise weniger als 2 cm, von dem Einschalter entfernt, wobei er insbesondere durch dieselbe Hand des Benutzers wie der Einschalter bedient werden kann.

Ein betätigungswirksamer Abstand zwischen dem Einschalter und dem Sicherheitsschalter beträgt mindestens 0,5 cm, insbesondere mindestens 0,8 cm, vorzugsweise mindestens 1,2 cm und beträgt insbesondere weniger als 4 cm, insbesondere weniger als 3 cm, vorzugsweise weniger als 2,5 cm. Betätigungswirksamer Abstand bedeutet, dass die jeweiligen Druckpunkte der Schalter zur wirksamen Betätigung diesen Abstand aufweisen müssen. Durch einen Mindestabstand wird sichergestellt, dass der Sicherheitsschalter und der Einschalter nicht gleichzeitig mit einem Finger bedient werden können, wodurch die Wahrscheinlichkeit einer Fehlfunktion der Verriegelung reduziert wird. Der Sicherheitsschalter ist insbesondere als manueller Schalter ausgestaltet.

Erfindungsgemäß weist die Verriegelung eine Zeitintegrationsschaltung auf, mit welcher der Einschalter erst nach längerem ununterbrochenem Betätigen des Sicherheitsschalters entriegelt wird. Eine Zeitintegrationsschaltung erhöht weiter die Sicherheit der elektrischen Verriegelung. Insbesondere wird hierdurch die Sicherheit im Haushalt mit Kindern verbessert.

Die Integrationszeit der Zeitintegrationsschaltung kann eine Dauer von mindestens 0,1 sec, insbesondere mindestens 0,2 sec, vorzugsweise mindestens 0,3 sec haben. Erst wenn der Sicherheitsschalter für eine Dauer von beispielsweise 0,2 sec gedrückt ist, wird dann der Einschalter aktivierbar.

In einer speziellen Ausgestaltung weist die Verriegelung eine Zeitintegrationsschaltung auf, mit welcher der Einschalter erst nach längerem ununterbrochenem Betätigen des Sicherheitsschalters entriegelt wird für ein vorgegebenes Zeitfenster entriegelt wird. Mit anderen Worten: Nach Verstreichen einer bestimmten Zeitdauer nach Betätigen des Sicherheitsschalters wird der Ein-/Ausschalter erst entriegelt und dann wieder verriegelt. Damit kann der Einschalter nur innerhalb eines vorgegebenen Zeitfensters nach Betätigen des Sicherheitsschalters bedient werden. Auch hierdurch wird die Sicherheit des Küchengeräts weiter gesteigert. Die Dauer des Zeitfensters kann in einem Bereich von 0,3 sec bis 2 sec, insbesondere in einem Bereich von 0,5 bis 1 sec, liegen.

In einer vorteilhaften Ausgestaltung ist ein weiteres elektrisches Betätigungsmittel, insbesondere ein elektrischer Stufenschalter, zum Einstellen einer elektrischen Leistungsstufe des Küchengeräts vorgesehen, wobei das Betätigungsmittel insbesondere an dem, insbesondere zusammen mit und in Verbindung mit dem, Einschalter vorgesehen ist. Mit Hilfe des Betätigungsmittels kann die Leistungsstufe des Küchengeräts frei, insbesondere kontinuierlich, gewählt werden, vorzugsweise in einem Bereich von 100 Watt bis 900 Watt, insbesondere in einem Bereich von 150 Watt und 400 Watt.

Vorteilhafterweise bleibt der Sicherheitsschalter nur für den Zeitraum eingeschaltet, solange er betätigt, insbesondere gedrückt, ist, und schaltet sonst wieder aus. Hierdurch wird sichergestellt, dass das Küchengerät nur dann betrieben werden kann, wenn zumindest für einen Zeitraum sowohl der Sicherheitsschalter als auch der Einschalter gemeinsam und zeitgleich betätigt, insbesondere gedrückt sind.

Fingerbetätigen bedeutet, dass der Sicherheitsschalter von einem Finger des Benutzers betätigt wird. Hierzu ist der Sicherheitsschalter insbesondere als Tast- oder Kipp- oder Schwenkschalter für einen Finger vorgesehen.

Vorteilhafterweise wird der Einschalter entriegelt, wenn der Einschalter erst nach Betätigen des Sicherheitsschalters betätigt wird, insbesondere zeitverzögert um eine Dauer von mindestens 0,1 sec, insbesondere mindestens nur 0,2 sec, vorzugsweise mindestens 0,3 sec. In einer speziellen Ausgestaltung ist die Entriegelung nur für die Dauer eines vorgegebenen Zeitfensters in einem Bereich von 0,3 sec bis 2 sec, insbesondere in einem Bereich von 0,5 sec bis 1 sec, wirksam. Vorteilhafterweise kann der Einschalter nur während des Haltens des Sicherheitsschalters entriegelt werden, wobei in einer speziellen Ausgestaltung der Einschalter nur nach erfolgter Riegelung auch dann in eingeschalteter Stellung bleibt, wenn der Sicherheitsschalter nicht mehr gehalten wird.

Weitere vorteilhafte Einzelheiten und besondere Ausgestaltungen werden anhand der folgenden Zeichnung, welche die vorliegende Erfindung nicht einschränken, sondern lediglich exemplarisch illustrieren soll, näher erläutert.

Es zeigen schematisch:
- Fig. 1: ein erfindungsgemäßes Küchengerät, welches als Stabmixer ausgestaltet ist, in einer perspektivischen Draufsicht;
- Fig. 2: den Stabmixer nach Fig. 1 in einer perspektivischen Explosionsansicht;
- Fig. 3: das erfindungsgemäße Küchengerät nach Fig. 1 mit einer Ladestation in einer perspektivischen Schrägansicht von schräg oben;
- FIg.4: das Küchengerät und die Ladestation nach Fig. 3 in einer weiteren perspektivischen Schrägansicht von unten;
- Fig. 5: das erfindungsgemäße Küchengerät nach Fig. 1 in einer Seitenansicht, wobei das Küchengerät in eine Ladestation gestellt ist, die im Querschnitt gezeigt ist;
- Fig. 6: der erfindungsgemäße Stabmixer nach Fig. 2 mit einem geöffneten Gehäusespanndeckel und teilweise ausgeschnittenem Rand in einer perspektivischen Schrägansicht von der Seite;
- Fig. 7: der Stabmixer nach Fig. 6 mit geschlossenem Deckel;
- Fig. 8: eine erfindungsgemäße Ladestation nach Fig. 4 in einer Seitenansicht mit teilweise aufgeschnittenem Ladestationsgehäuse;
- Fig. 9: das Küchengerät und die Ladestation nach Fig. 3 in einer perspektivischen Schrägansicht von schräg oben.

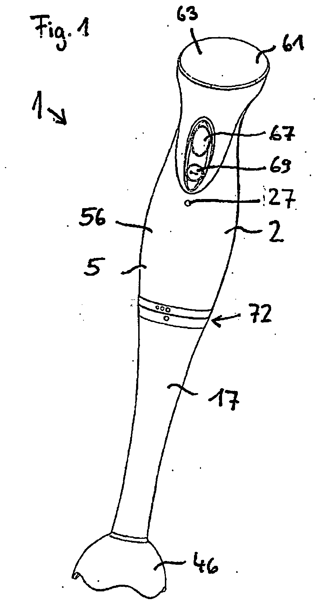

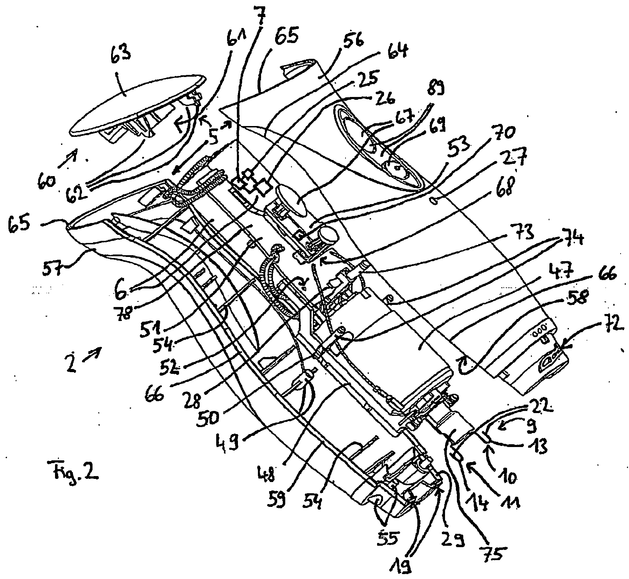

Fig. 1 zeigt ein erfindungsgemäßes Küchengerät 1. welches als Stabmixer 2 ausgestaltet ist. An dem Stabmixer 2 ist ein als Schneid - bzw. Pürrierwerk ausgebildetes Werkzeug 17 mit Hilfe eines Bajonettverschlusses 72 montiert. Das Werkzeug 17 weist einen Werkzeugkopf 46 auf, welcher über entsprechende Messer bzw. Mischelemente (nicht gezeigt) verfügt. Der Stabmixer 2 weist ein Gehäuse 5 mit einer ersten Gehäuseschale 56, einen als Spannelement 61 ausgebildeten Gehäusespanndeckel 63 und eine zweite Gehäuseschale 57 (siehe Fig. 2) auf. Eine Ladezustandsanzeige 27 zeigt an, ob der Stabmixer 2 betriebsbereit ist, insbesondere ob er hinreichend stark aufgeladen ist. Mit Hilfe eines Einschalters 67 wird der Stabmixer 2 in Betrieb genommen. Der Einschalter 67 ist jedoch nur wirksam, wenn er durch einen Sicherheitsschalter 69 entriegelt ist. Durch den von dem Einschalter 67 separaten Sicherheitsschalter 69 wird eine elektrische Verriegelung bewirkt, die den Einschalter 67 erst zeitverzögert nach Betätigen des Sicherheitsschalters 69 entriegelt bzw. frei gibt. Hierdurch wird sichergestellt, dass der Stabmixer 2 nicht ungewollt in Betrieb genommen wird, wodurch insbesondere auch die Sicherheit in einem Haushalt mit Kindern erhöht wird.

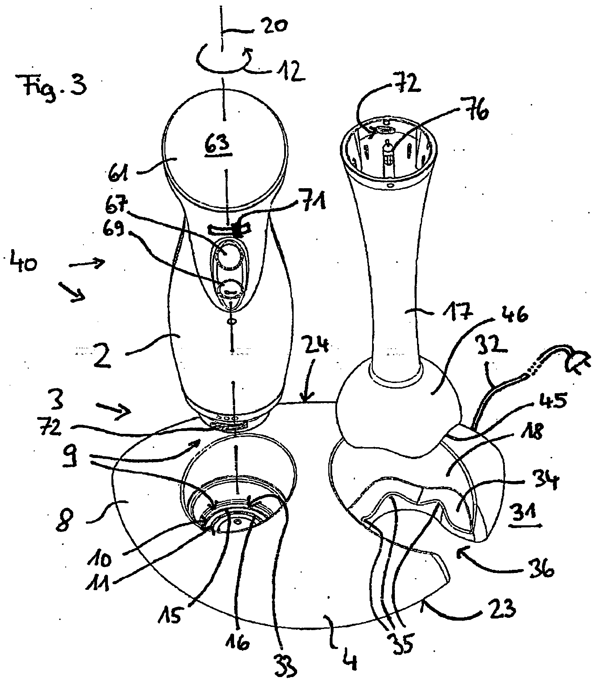

Fig. 2 zeigt einen erfindungsgemäßen Stabmixer 2 in einer perspektivischen Explosionsansicht mit einem Gehäuse 5, welches durch eine erste Gehäuseschale 56, eine zweite Gehäuseschale 57 und einen Gehäusespanndeckel 63 gebildet ist. Das Gehäuse 5 nimmt einen Motor 47, eine Steuerungsselektronik 51 auf einer Platine 78 und einen Akkumulator 6 auf. Der Motor 47, die Platine 78 mit der Steuerungselektronik 51 und der Akkumulator 6 sind auf einem Vormontageträger 48 montiert. Der Motor 47 und der Akkumulator 6 sind an dem in das Gehäuse 5 einsetzbaren Vormontageträger 48 befestigt. Der Vormontageträger 48 ist mit dem Gehäuse 5 klebstofffrei und unverschraubt verbunden. Hierfür weist der Vormontageträger 48 Rastelemente 49, 74 auf, mit denen er an entsprechenden Gegenelementen 50 am Gehäuse 5 beispielsweise durch Anklipsen, fixiert ist. Die Steuerungselektronik 51 ist mit Hilfe von ersten Rastmitteln 52 angeklipst. Auch sind ein elektrischer Schalter 67, 69, ein Einschalter 67 und ein Sicherheitsschalter 69, an dem Vormontageträger 48 mit Hilfe von zweiten Rastmitteln 53 angeklipst. Der Motor 47 und der Akkumulator 6 sind an dem Vormontageträger 48 angeklipst. Durch die Vormontagefähigkeit und die schraubenfreie Verbindbarkeit der einzelnen Komponenten kann die Herstellung des Stabmixers 2 erheblich vereinfacht und preisgünstiger gestaltet werden. Die beiden Gehäuseschalen 56, 57 sind entlang einer Gehäusenut 58 bzw. Gehäusefeder 59 entlang einer ersten Verbindungslinie 64, welche durch die Ränder 66 der beiden Gehäuseschalen 56, 57 gebildet ist, spaltfrei miteinander verbunden. Der Gehäusespanndeckel 63 wird entlang einer zweiten Verbindungslinie 65 mit den beiden Gehäuseschalen 56, 57 im Wesentlichen spaltfrei verbunden. Der Gehäusespanndekkel 63 dient als Spannelement 61, welches mit Hilfe eines Befestigungsmittels 60 die beiden Gehäuseschalen 56, 57 miteinander verbindet. Das Spannelement 61 greift an der ersten Gehäuseschale 56 an mindestens zwei separaten Befestigungsstellen 62 ein und drückt die erste Gehäuseschale 56 an den beiden Befestigungsstellen 62 gegen die zweite Gehäuseschale 57. Der Vormontageträger 48 mit dem Motor 47 und dem Akkumulator 6 wird mit Hilfe von Stützen 54 in den Gehäuseschalen 56, 57 abgestützt und somit klebstofffrei und ohne Schrauben fixiert. An dem Akkumulator 6 ist eine Sicherheitseinrichtung 7 vorgesehen, welche den Akkumulator 6 gegenüber einem Überdruck, einer Bildung von metallischem Lithium an den Elektroden des Akkumulators 6 oder einer Bildung von Gas im Akkumulator 6 entgegenwirkt. Außerdem sorgt eine Regelungseinrichtung 26 mit einem Temperatursensor 25 dafür, dass der Akkumulator 6 vor übermäßigen Temperaturschwankungen geschützt wird, die eine (zwischenzeitliche oder fortbestehende) Beeinträchtigung der Leistungsfähigkeit des Akkumulators 6 zur Folge haben könnte. Die Regelungseinrichtung 26 kann die Temperatur des Akkumulators 6 auf einen Temperaturbereich regeln. Mit Hilfe der Sicherheitseinrichtung 7 wird ein maximaler Ladestrom bzw. ein maximaler Entladestrom vorgegeben, wodurch die Sicherheit des Lithium - Ionen - Akkumulators 6 erhöht wird. Die Platine 78 ist mit Hilfe von ersten Rastmitteln 52 an dem Vormontageträger 48 befestigt. Ein Einschalter 67 und ein Sicherheitsschalter 69 sind mit Hilfe von zweiten Rastmitteln 53 an der Platine 78 angeklipst. Die erste Gehäuseschale 56 weist im Bereich der Schalter 67, 69 eine mit einer 2K - Technik angespritzte Gummimembran 89 auf, welche die darunter befindlichen Schalter 67, 69 schützt. Der Einschalter 67 wird durch den Sicherheitsschalter 69 entriegelt, indem der Sicherheitsschalter 69 einen kurzen Moment vor dem Einschalter 67 betätigt wird. Hierzu ist eine Zeitintegrationsschaltung 70 vorgesehen, die eine Entriegelung erst mit einer Verzögerung von 0,3 sec zulässt. Der Sicherheitsschalter 69 und die Zeitintegrationsschaltung 70 bilden eine elektronische Verriegelung 68 für den Stabmixer 2. Der Ladezustand des Akkumulators 6 wird mit Hilfe einer Ladezustandsanzeige 27 angezeigt. Die Ladezustandsanzeige 27 weist eine LED-Anzeige 28 auf der Platine 78 auf, deren Licht durch einen Lichtleiter 73 nach außen geleitet wird. Ein Werkzeug 17 (siehe Fig. 3) wird mit Hilfe eines Bajonettverschlusses 72 mit dem Stabmixer 2 verbunden, wobei ein Rotor 75 des Motors 47 mit einer Welle 76 (siehe Fig. 3) des Werkzeugs 17 drehfest verbunden wird. Die beiden Gehäuseschalen 56, 57 werden an dem werkzeugseitigen Ende des Stabmixers 2 mit Hilfe von Schraubenbefestigungsmittel 55 miteinander verbunden. Zum Aufladen des Akkumulators 6 sind zwei als Federelemente 22 ausgebildete Schleifkontakte 10, 11, vorgesehen, die jeweils einen Schleifer 13, 14 aufweisen. Mit Hilfe der beiden Schleifkontakte 10, 11 wird eine elektrische Kupplung 9 zur Übertragung von elektrischer Energie von einer Ladestation 8 (siehe Fig. 3) auf den Stabmixer 2 bereitgestellt. Die beiden Schleifer 13, 14 werden mit Hilfe von Durchführungen 19 durch eine Wandung 29 der zweiten Gehäuseschale 47 hindurch geführt.

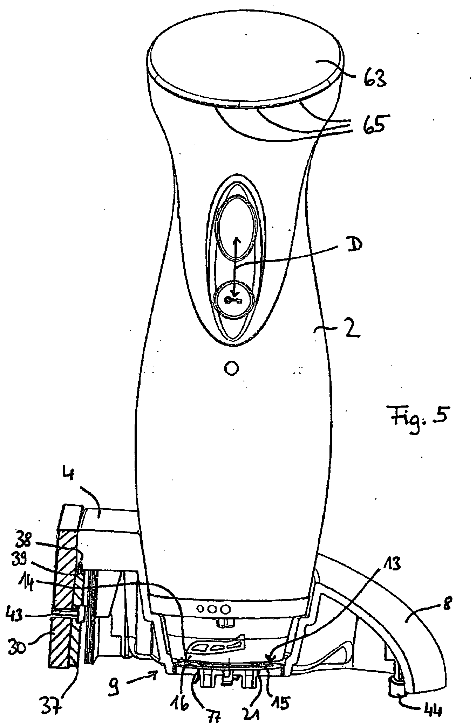

Fig. 3 zeigt den erfindungsgemäßen Stabmixer 2 nach Fig. 2 mit einer Ladestation 8 und einem Werkzeug 17 in einer perspektivischen Schrägansicht von schräg oben. Der Akkumulator 6 betriebene Stabmixer 1 und die Ladestation 8 für den Stabmixer 2 zum Aufladen des Akkumulators 6 bilden ein Ladesystem 3, wobei der Stabmixer 2 während eines Aufladens des Akkumulators 6 mit der Ladestation 8 über eine elektrische Kupplung 9 verbindbar ist. Mit Hilfe der Kupplung 9 wird elektrische Energie von der Ladestation 8 auf den Stabmixer 2 übertragen. Die Kupplung 9 lässt eine Drehung des Stabmixers 2 relativ zur Ladestation 8 zu, so dass der Stabmixer 2 einfach und ohne genaue Ausrichtung seines Drehwinkels 12 relativ zur Ladestation 8 in die Ladestation 8 eingesetzt werden kann. Die Kupplung 9 weist zwei Schleifkontakte 10, 11 mit zwei Schleifern 13, 14 und zwei Schleifringen 15, 16 auf und lässt einen Drehwinkel 12 um mehr als 360° zu. Hierdurch wird ein besonders einfaches Koppeln des Stabmixers 2 mit der Ladestation 8 ermöglicht. Die Schleifringe 15, 16 bilden elektrische Kontaktflächen 33 zur Herstellung eines galvanischen Kontakts des Akkumulators 6 im Stabmixer 2 mit der Ladestation 8. Die Ladestation 8 wird mit einem externen Stromnetz (nicht dargestellt) elektrisch verbunden. Die Ladestation 9 bildet einen Halter 4 für den Stabmixer 2 und kann mit einer Befestigungsfläche 24 an einer Wand 30 (siehe Fig. 5) befestigt bzw. mit Hilfe einer Standfläche 23 auf einer Oberfläche 31 wie z.B. auf eine Küchenplatte gestellt werden. Der Halter 4 weist eine Werkzeugaufnahme 18 für das Werkzeug 17 auf, wofür die Werkzeugaufnahme 18 einen Aufnahmeboden 34 mit Wellungen 35 besitzt, welche der Form des Werkzeugkopfes 46 und dessen Kontur 45 derart angepasst sind, dass ein sicheres Halten des Werkzeuges 17 gewährleistet ist, wenn das Werkzeug 17 in die Werkzeugaufnahme 18 gestellt wird. Wird der Halter 4 an der Wand 30 (siehe Fig. 5) befestigt, kann das Werkzeug 17 auch in die Werkzeugaufnahme 18 eingehängt werden, indem das Werkzeug 17 durch einen radialen Spalt 36 der ringförmigen Werkzeugaufnahme 18 eingeschoben wird. Die Ladestation 8 weist elektrische Leitungen 32 auf, die mit einer externen Stromversorgung (nicht dargestellt) verbunden werden können. Der Stabmixer 2 und das Werkzeug 17 werden mit Hilfe eines Bajonettverschlusses 72 durch Drehung um etwa 120° um eine Längsachse 20 befestigt. Hierbei koppelt eine Welle 76 des Werkzeugs 17 mit dem Rotor 75 (siehe Flg. 2) des Motors 47. Die Leistungsstufe des Stabmixers 2 kann mit Hilfe eines Betätigungsmittels 71 eingestellt werden. Insbesondere kann zwischen verschiedenen Geschwindigkeits- bzw. Leistungsstufen wie z.B. 100 W, 200 W und 300 W gewählt werden. Der multifunktionelle Halter 4 für den Stabmixer 2 und der Stabmixer 2 stellen eine Anordnung 40 dar, die besonders vorteilhaft für den Gebrauch des Stabmixers 2 ist. Insbesondere kann hiermit der Stabmixer 2 auf einfache Weise ohne störendes elektrisches Kabel ergriffen und verwendet werden. Nach Gebrauch kann der Stabmixer 2 schnell und einfach in die Ladestation 8 gestellt werden. Mit Hilfe des Halters 4 kann der Stabmixer 2 sowohl auf eine Oberfläche 31 gestellt werden als auch an einer Wand 30 wie z.B. eine Küchenwand oder eine Schrankwand befestigt werden.

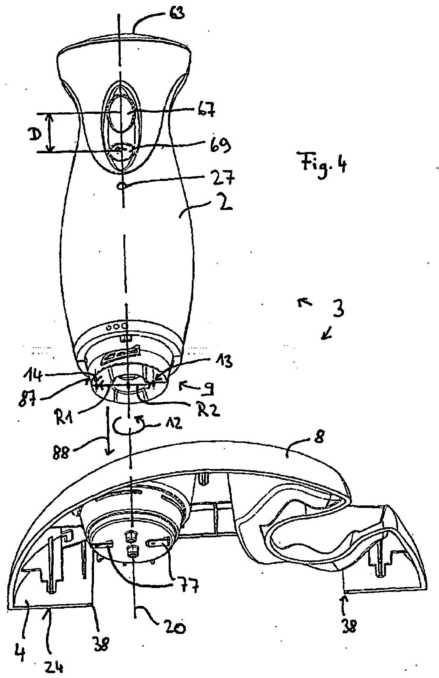

Fig. 4 zeigt einen erfindungsgemäßen Stabmixer 2 mit der Ladestation 8 nach Fig. 3 in einer perspektivischen Schrägansicht. Der Einschalter 67 und der Sicherheitsschalter 69 sind durch einen betätigungswirksamen Abstand D voneinander getrennt. Betätigungswirksam bedeutet hier, dass zwei Finger diesen Abstand D aufweisen müssen, damit die beiden Schalter wirksam betätigt werden können. Hierdurch wird sichergestellt, dass ein Betrieb des Stabmixers 2 nicht durch Zufall oder ungewollt mit einem einzelnen Finger ausgelöst werden kann. Das Ladesystem 3 weist den ersten Schleifer 13 und den zweiten Schleifer 14 auf, die jeweils einen Abstand von der Längsachse 20 besitzen, der dem Radius R1, R2 eines Schleifrings 15, 16 entspricht. Die beiden Schleifringe 15, 16 (siehe Fig. 3) können mit Hilfe von Kontaktbeinen 77 elektrisch kontaktiert werden. Der Halter 4 kann mit Hilfe einer Montageplatte 37 (siehe Fig. 5) an einer Wand 30 gehalten werden. Die Montageplatte 37 wird an dem Halter 4 mittels einer Montagenplattennut 38 befestigt. Der Stabmixer 2 kann aufgrund der 360°-Kupplung 9 mühelos in die Ladestation 8 gestellt werden, ohne dass man eine besondere Aufmerksamkeit auf die Ausrichtung des Stabmixers 2 relativ zur Lagestation 8 richten muss. Mit Hilfe von Führungsflächen 87, die in Bezug auf eine Verkupplungsrichtung 88, entlang derer das Küchengerät 1 in die Ladestation 8 eingeführt und angekoppelt wird, abgeschrägt sind, wird ein Verkuppeln des Küchengeräts 1 mit der Ladestation 8 weiterhin erleichtert. Die Führungsflächen 88 können trichterförmig sein. Mit Hilfe der Führungsflächen 88 wird das Küchengerät 1 an die richtige Position in der Ladestation 8 herangeführt.

Fig. 5 zeigt den erfindungsgemäßen Stabmixer 2 in einer Seitenansicht, wobei das Küchengerät 1 in eine Ladestation 8 gestellt ist, die im Querschnitt gezeigt ist. Hierbei wird die elektrische Kupplung 9 des Stabmixers 2 mit der Ladestation 8 durch den ersten Schleifkontakt 10 mit dem ersten Schleifer 13 und dem ersten Schleifring 15 sowie durch den zweiten Schleifkontakt 11 mit dem zweiten Schleifer 14 und dem zweiten Schleifring 16, hergestellt. Die beiden Schleifringe 15, 16 weisen jeweils Kontaktbeine 77 auf, die von unten elektrisch kontaktiert werden können. Die beiden Schleifringe 15, 16 weisen ebenso Befestigungsbeine 21 auf, die an der Ladestation 8 einen Haken und somit eine sichere Befestigung der beiden Schleifringe 15, 16 herstellen. Der Halter 4 kann mit Gummifüßen 44 auf einer Oberfläche 31 (siehe Fig. 3) stehen. Er kann jedoch auch mit Hilfe der Montageplatte 17, welche durch eine Montageplattennut 38 und eine Montageplattenfeder 39 an dem Halter 4 befestigt ist, mit Hilfe einer Schraube 33 an einer Wand 30 verschraubt werden. Das Gehäuse 5 des Stabmixers 2 wird mit Hilfe eines Gehäusespanndeckels 63 entlang einer zweiten Verbindungslinie 65 an den beiden Gehäuseschalen 56, 57 verbunden.

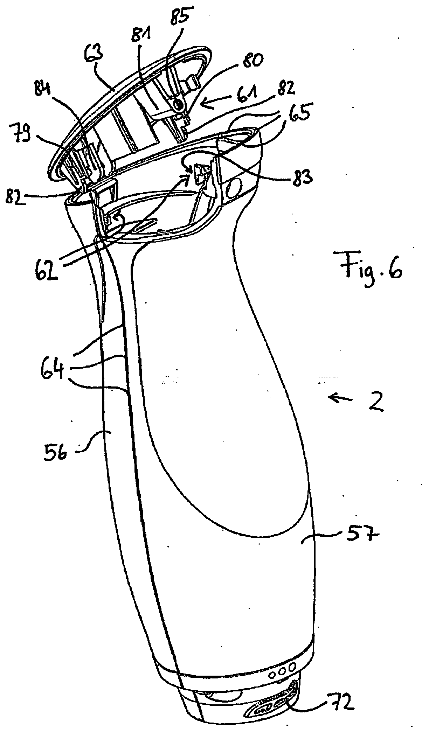

Fig. 6 zeigt den erfindungsgemäßen Stabmixer 2 nach Fig. 1 mit einem geöffnete Spanndeckel 63 und einer teilweise aufgeschnittenen zweiten Gehäuseschale 57. Der Gehäusespanndeckel 63 bildet ein Spannelement 61, durch welches die erste Gehäuseschale 56 mit der zweiten Gehäuseschale 57 derart verklammert wird, so dass eine im Wesentlichen spaltfreie Verbindung zwischen den beiden Gehäuseschalen 56, 57 entlang der ersten Verbindungslinie 64 hergestellt wird. Hierzu greift der Gehäusespanndeckel 63 mit Hilfe eines vierten Verbindungselements 64 in eine entsprechende Aufnahme an der ersten Gehäuseschale 56, und ein erstes Verbindungselement 79 und ein zweites Verbindungselement 80 mit jeweiligen Verbindungsvorsprüngen 82 hintergreifen an zwei separaten Verbindungsstellen 62 in entsprechende separate Verbindungsaufnahmen 83. Ein viertes Verbindungselement 84 greift in eine Deckelaufnahme 46 an der ersten Gehäuseschale 56. Wird der Gehäusespanndeckel 63 mit Hilfe eines dritten Verbindungselements 81 und einer Schraubverbindung 85 an der zweiten Gehäuseschale 57 verbunden, drücken die jeweiligen Vorsprünge 82 die erste Gehäuseschale 56 an den beiden separaten Verbindungsstellen 62 gegen die zweite Gehäuseschale 57. Hierdurch wird ein spaltfreies Verbinden der beiden Gehäuseschalen 56, 57 auch dann bewerkstelligt, wenn Fertigungstoleranzen entlang der ersten Verbindungslinie 64 (z.B. Ungenauigkeiten an der Gehäusenut 58 bzw. an der Gehäusefeder 59 der Gehäuseschalen 56, 57) das Verschließen der beiden Gehäuseschalen 56, 57 erschweren.

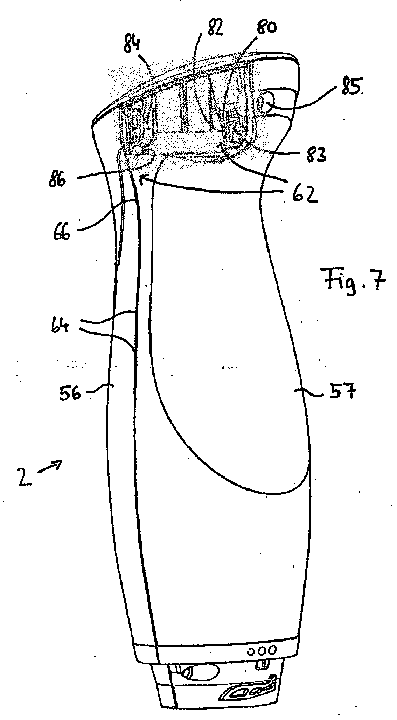

Fig. 7 zeigt den erfindungsgemäßen Stabmixer 2 nach Fig. 6 mit geschlossenem Gehäusespanndekkel 63 in perspektivischer Seitenansicht mit einer teilweisen aufgeschnittenen zweiten Gehäuseschale 57. Man erkennt, dass der Verbindungsvorsprung 82 die Verbindungsaufnahme 83 hintergreift und in der Folge die beiden Ränder 66 der Gehäuseschalen 56, 57 an den beiden Befestigungsstellen 62 zusammengedrückt.

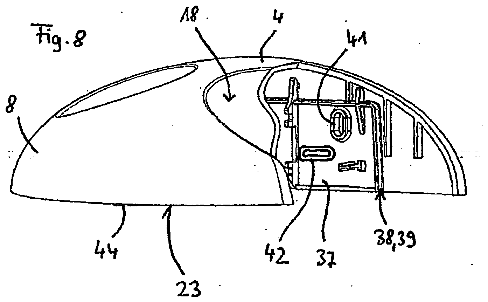

Fig. 8 zeigt den als Ladestation 8 ausgebildeten Halter 4, der teilweise aufgeschnitten ist von der Seite mit der Werkzeugaufnahme 18. Der Halter 4 weist an seiner Standfläche 23 Gummifüße 44 auf. Der Halter kann mit Hilfe der Montageplatte 37 an einer Wand 30 (siehe Fig. 5) befestigt werden. Hierzu dienen erste 41 und zweite 42 Langlöcher, mit denen eine einfache Schraubverbindung an der Wand 30 hergestellt werden kann. Die Langlöcher 41, 42 erlauben ein Ausrichten der Montageplatte 37 in der vertikalen und waagerechten Richtung und ermöglichen somit eine besonders einfache Befestigung des Halters 4 an der Wand 30.

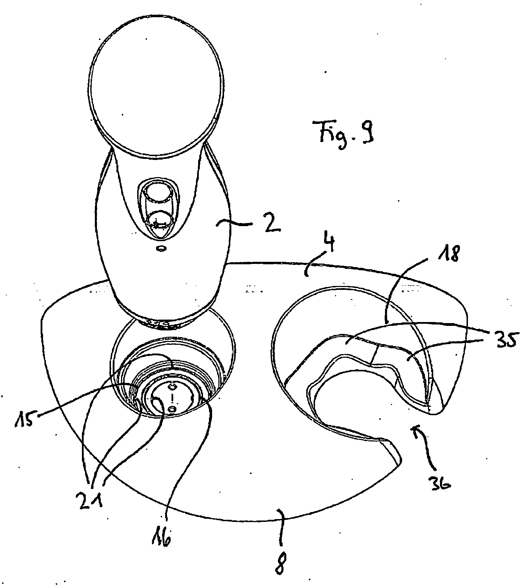

Fig. 9 zeigt den erfindungsgemäßen Stabmixer 2 mit dem als Ladestation 8 ausgestalteten Halter 4 in einer perspektivischen Schrägansicht. Zu erkennen sind die an der Ladestation 8 ausgebildeten Schleifringe 15, 16, die mit Hilfe von Befestigungsbeinen, welche Widerhaken (nicht gezeigt) aufweisen können, an dem Halter 4 befestigt sind. Die Werkzeugaufnahme 18 weist Wellungen 15 auf, welche der Kontur 45 des Werkzeugs 17 derart angepasst sind, dass das Werkzeug 17 sicher in der Werkzeugaufnahme 18 steht. Mit Hilfe des radialen Spalts 36 kann das Werkzeug 17 in die Werkzeugaufnahme 18 eingehängt werden.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:

Ein besonders vorteilhaftes elektromotorisches Küchengerät 1, welches netzunabhängig ist weist einen Lithium-Ionen-Akkumulator 6 oder einen Lithium-Polymer-Akkumulator auf. Der Akkumulator 6 kann eine spezifische Kapazität in einem Bereich von 50 Ah/kg bis 130 Ah/kg, Insbesondere von 60 Ah/kg bis 80 Ah/kg, aufweisen. Insbesondere ist eine Sicherheitseinrichtung 7, insbesondere eine Schutzschaltung, für den Akkumulator 6, vorgesehen, wobei vorteilhafterweise die Sicherheitseinrichtung 7 einem übermäßigen Überdruck entgegenwirkt und dafür insbesondere eine Überdruck-Ausblasöffnung aufweist. Auch kann die Sicherheitseinrichtung 7 einen Temperatursensor 20 für den Akkumulator 6 aufweisen. Die Sicherheitseinrichtung kann die Temperatur des Akkumulators 6 regeln. Vorteilhafterweise ist eine elektronische Regelungseinrichtung 26 vorgesehen, die das Laden und Entladen des Akkumulators 6 überwacht und gegebenenfalls den Lade- bzw. Entladestrom begrenzt. Die von dem Akkumulator 6 abgebbare maximale Leistung liegt insbesondere in einem Bereich von 200 W bis 800 W, insbesondere in einem Bereich von 250 W bis 400 W. Das Küchengerät 1 ist insbesondere als Handrührgerät, vorzugsweise als Stabmixer 2, ausgestaltet. In einer speziellen Ausgestaltung ist eine Ladezustandsanzeige 27 für den Akkumulator 6, insbesondere eine LED-Anzeige 28, vorgesehen.

Ein bevorzugtes Ladesystem 3 umfasst ein mit einem Akkumulator 6 betriebenes Küchengerät 1, insbesondere einen Stabmixer 2, und eine Ladestation 8 für das Küchengerät 1 zum Aufladen des Akkumulators 6, wobei zum Aufladen des Akkumulators 6 das Küchengerät 1 mit der Ladestation 8 mittels einer Kupplung 9 verbindbar ist, um elektrische Energie von der Ladestation 8 auf das Küchengerät 1 zu übertragen, wobei die Kupplung 9 eine Drehung des Küchengeräts 1 relativ zur Ladestation 8 zulässt. Die Kupplung 9 lässt vorzugsweise eine Drehung, insbesondere um die Vertikale, um einen Drehwinkel 12 von mehr als 90°, insbesondere mehr als 180°, vorzugsweise um mehr als 360 °, zu. In einer speziellen Ausgestaltung weist die Kupplung 9 mindestens zwei Schleifkontakte 10, 11 mit zwei Schleifern 13, 14 und zwei Schleifringen 15, 16 auf, wobei die beiden Schleifringe 15, 16 konzentrisch angeordnet sein und verschiedene Radien R1, R2 aufweisen können oder die beiden Schleifringe 15, 16 koaxial versetzt angeordnet sein können. Die beiden Schleifringe 15, 16 sind vorteilhafterweise an der Ladestation 8 befestigt sind. Zur Vermeidung einer elektrolytischen Korrosion durch Flüssigkeitsspritzer an der Ladestation können die beiden Schleifringe 15, 16 am Küchengerät 1 befestigt sein. Vorteilhafterweise weist das Küchengerät 1 eine Werkzeugaufnahme 18 für ein Werkzeug 17 auf und die Schleifkontakte 10, 11 für die Kupplung 9 des Küchengeräts 1 sind mit der Ladestation 8 derart an bzw. in der Werkzeugaufnahme 18 angeordnet, dass die Schleifkontakte 10, 11 am Küchengerät 1 durch das Werkzeug 17 am Küchengerät 1 während des Einsatzes des Küchengeräts 1 überdeckt werden. Die Schleifringe 15, 16 sind insbesondere aus einem Blech gestanzt. Ein Schleifring 15, 16 weist vorteilhafterweise mindestens ein zu einer durch den Schleifring 15, 16 gebildeten Ebene abgewinkeltes Kontaktbein 77 auf, das durch eine Durchführung 19 in einer Wandung 29 an dem Küchengerät 1 bzw. an der Ladestation 8 hindurchragt. Ein Schleifring 15, 16 kann mindestens zwei, vorzugsweise mindestens vier, insbesondere zu einer durch den Schleifring 15, 16 gebildeten Ebene abgewinkelte, Befestigungsbeine 21 aufweisen, mit denen der Schleifring 15, 16 befestigt, insbesondere festgeklipst oder eingehakt, ist. Die Ladestation 8 ist vorteilhafterweise durch Spritzgießen hergestellt. Die Schleifer 13, 14 sind vorteilhafterweise als Federelemente 22 ausgebildet und stützen sich im verkoppelten Zustand des Küchengeräts 1 und der Ladestation 8 federnd auf den Schleifringen 15, 16 ab. Vorteilhafterweise sind in Bezug auf eine Verkupplungsrichtung 88 abgeschrägte und/oder gewölbte Führungsflächen 87 am Küchengerät 1 und/oder an der Ladestation 8 vorgesehen zum erleichterten Verbinden des Küchengeräts mit der Ladestation. Die verwendete Ladestation 8 ist geeignet und bestimmt zur Verwendung mit dem Ladesystem.

Ein besonders vorteilhafter multifunktioneller Halter 4 für einen Stabmixer 2 umfasst eine Standfläche 23, mit welcher der Halter 4 auf eine waagerecht ebene Oberfläche 31 gestellt werden kann, und eine Befestigungsfläche 24, mit der der Halter 4 an einer Wand 30 befestigbar ist. Er sieht vorteilhafterweise eine erste Werkzeugaufnahme 18 zum Halten eines Werkzeugs 17, insbesondere eines Rühr- und/oder Pürierwerks, vor. Der Halter 4 weist insbesondere elektrische Leitungen 32 auf und bildet vorteilhafterweise eine Ladestation 8 für einen Akkumulator 6 betriebenen Stabmixer 2. Der Halter 4 kann elektrische Kontaktflächen 33, insbesondere Schleifringe 15, 16 und/oder Schleifer 13, 14, für eine elektrische Kontaktierung des Akkumulator 6 betriebenen Stabmixers 2 aufweisen. Vorteilhafterweise ist die Werkzeugaufnahme 18 so beschaffen, dass Werkzeug 17 in die Werkzeugaufnahme 18 hinein gestellt werden kann, so dass sich insbesondere das Werkzeug 17 im Wesentlichen oberhalb der Werkzeugaufnahme 18 befindet. Alternativ oder zusätzlich kann die Werkzeugaufnahme 18 so beschaffen sein, dass das Werkzeug 17 in die Werkzeugaufnahme 18 eingehängt werden kann, so dass sich insbesondere das Werkzeug 17 im Wesentlichen unterhalb der Werkzeugaufnahme 18 befindet. In einer speziellen Ausgestaltung weist die Werkzeugaufnahme 18 einen Aufnahmeboden 34 auf, der gewellt ist und insbesondere mindestens vier, vorteilhafterweise mindestens fünf, Wellungen 35 aufweist. Die Werkzeugaufnahme 18 kann ringförmig sein, wobei vorteilhafterweise die ringförmige Werkzeugaufnahme 18 einen im Wesentlichen radialen Spalt 36 aufweist, mit dem das Werkzeug 17 in die ringförmige Werkzeugaufnahme 18 eingeschoben werden kann. Die Befestigungsfläche 24 ist vorteilhafterweise als eine am Halter 4 lösbar befestigbare Montageplatte 37 ausgebildet. Die Montageplatte 37 kann so ausgestaltet sein, dass die an dem Halter 4 festgeklipst werden kann. Die Montageplatte 37 kann insbesondere mittels einer Montageplattennut 38 bzw. Montageplattenfeder 39 am Halter 4 eingeschoben und befestigt werden. Von Vorteil ist, wenn die Montageplatte 37 mindestens ein erstes Langloch 41 für eine Befestigung mit einer Schraube 43 an einer Wand 3, aufweist. Von Vorteil ist auch, wenn ein zweites Langloch 42 für eine Befestigung des Halters 4 mit einer Schraube 43 an einer Wand 3 vorgesehen ist, welches insbesondere senkrecht auf dem ersten Langloch 41 steht. Eine weitere Ausgestaltung sieht vor, dass an der Standfläche 23 Gummifüße 44 vorgesehen sind.

Eine besonders vorteilhafte Anordnung umfasst den vorteilhaften Halter und einen Stabmixers 2, der von dem Halter 4 gehalten wird. Die Anordnung kann weiterhin ein Werkzeug 17 für den Stabmixer 2, insbesondere ein Rühr- und/oder Pürierwerk, aufweisen, wobei das Werkzeug 17 mittels einer Werkzeugaufnahme 18 von dem Halter 4 gehalten wird. Es ist von Vorteil, wenn die Werkzeugaufnahme 18 entsprechend der Kontur 45 eines Werkzeugkopfes 46 geformt ist.

Ein besonders vorteilhafter Stabmixer 2 umfasst ein Gehäuse 5 und einen darin befindlichen Motor 47 und einen darin befindlichen Akkumulator 6, und sieht vor, dass der Motor 47 und der Akkumulator 6 an einem in das Gehäuse 5 einsetzbaren Vormontageträger 48 befestigt sind, der an dem Gehäuse 5 befestigt ist. In einer vorteilhaften Ausgestaltung ist vorgesehen, dass der Vormontageträger 48 klebstofffrei und/oder unverschraubt mit dem Gehäuse 5 verbunden ist. In einer vorteilhaften Ausgestaltung ist vorgesehen, dass der Vormontageträger 48 Rastelemente 49, 74 aufweist, mit denen er an entsprechenden Gegenelementen 50 am Gehäuse 5 fixiert, insbesondere angeklipst, ist. In einer vorteilhaften Ausgestaltung ist vorgesehen, dass an dem Vormontageträger 48 eine Steuerungselektronik 51 befestigt, insbesondere mit Hilfe von ersten Rastmitteln 52 angeklipst, ist. In einer vorteilhaften Ausgestaltung ist vorgesehen, dass an dem Vormontageträger 48 elektrische Schalter 67, 69, insbesondere ein Einschalter 67, befestigt, vorzugsweise mit Hilfe von zweiten Rastmitteln 53 angeklipst, ist. In einer vorteilhaften Ausgestaltung ist vorgesehen, dass der Motor 47 und/oder der Akkumulator 6 an dem Vormontageträger 48 angeklipst ist. In einer vorteilhaften Ausgestaltung ist vorgesehen, dass der Vormontageträger 48 aus Kunststoff, insbesondere durch Spritzgießen, hergestellt ist. In einer vorteilhaften Ausgestaltung ist vorgesehen, dass der Vormontageträger 48 in dem Gehäuse 5 mit Hilfe von Stützen 54, insbesondere Stützrippen, gehalten wird. In einer vorteilhaften Ausgestaltung ist vorgesehen, dass das Gehäuse 5 zwei zusammensetzbare Gehäuseschalen 56, 57 aufweist, die insbesondere mittels einer Gehäusenut 58 bzw. Gehäusefeder 59 spaltfrei verbindbar sind. In einer vorteilhaften Ausgestaltung ist vorgesehen, dass der Vormontageträger 48 aus Kunststoff, insbesondere durch Spritzgießen geformt, ist.

Ein besonders vorteilhafter Vormontageträger 48 ist geeignet und bestimmt für den vorteilhaften Stabmixer 2.

Ein besonders vorteilhaftes Verfahren zur Herstellung eines Stabmixers 2 mit einem Gehäuse, einem darin befindlichen Motor 47 und einem darin befindlichen Akkumulator 6, umfasst folgende Verfahrensschritte: Vormontieren des Motors 47 und des Akkumulators 6 an einem Vormontageträger 48; Einbringen des Vormontageträgers 48 mit Motor 47 und Akkumulator 6 in das Gehäuse 5; Schließen des Gehäuses 5. In einer vorteilhaften Ausgestaltung ist vorgesehen, dass der Motor 47 und der Akkumulator 6 an dem Vormontageträger 48 angeklipst werden können. In einer vorteilhaften Ausgestaltung ist vorgesehen, dass der Vormontageträger 48 an dem Gehäuse 5 angeklipst werden kann.

Ein besonders vorteilhaftes von Hand geführtes Küchengerät 1, insbesondere Stabmixer 2, mit einem Gehäuse 5 umfasst mindestens eine erste 56 und eine zweite 57 Gehäuseschale und ein Befestigungsmittel 60 zur Verbindung der beiden Gehäuseschalen 56, 57 miteinander, und sieht vor, dass das Befestigungsmittel 60 ein Spannelement 61 aufweist, welches an der ersten Gehäuseschale 56 an mindestens zwei separaten Befestigungsstellen 62 eingreift und die erste Gehäuseschale 56 an den beiden Befestigungsstellen 62 gegen die zweite Gehäuseschale 57 drückt. In einer vorteilhaften Ausgestaltung ist vorgesehen, dass das Spannelement 61 durch einen, insbesondere von den Gehäuseschalen 56, 57 separaten, Gehäusespanndeckel 63 gebildet ist, der mit den beiden Gehäuseschalen 56, 57 entlang einer zweiten Verbindungslinie 65 spaltfrei verbunden ist. In einer vorteilhaften Ausgestaltung ist vorgesehen, dass der Spanndeckel 63 die beiden Gehäuseschalen 56, 57 zusammenklammert. In einer vorteilhaften Ausgestaltung ist vorgesehen, dass das Spannelement 61 mindestens ein erstes 79, ein zweites 80 und ein drittes 81 Verbindungselement aufweist, wobei das Spannelement 61 mit dem ersten 79 und zweiten 80 Verbindungselement an der ersten Gehäuseschale 56 und mit dem dritten Verbindungselement 81 an der zweiten Gehäuseschale 57 befestigt ist. In einer speziellen Weiterbildung ist vorgesehen, dass das erste 79 und zweite 80 Verbindungselement durch einen Verbindungsvorsprung 82 gebildet ist, der an der jeweiligen Gehäuseschale 56, 57 in eine Verbindungsaufnahme 83 eingreift. In einer vorteilhaften Ausgestaltung ist vorgesehen, dass das dritte Verbindungselement 82 eine Schraubverbindung 85 herstellt. In einer vorteilhaften Ausgestaltung ist vorgesehen, dass ein viertes Verbindungselement 84 am Spannelement 61 vorgesehen ist, mit dem das Spannelement 61 an der ersten 56 oder der zweiten 57 Gehäuseschale befestigt ist. In einer vorteilhaften Ausgestaltung ist vorgesehen, dass die beiden Gehäuseschalen 56, 57 an einer entlang ihren Rändern 66 gebildeten ersten Verbindungslinie 64 mittels einer Gehäusenut und Gehäusefeder miteinander verbindbar sind. In einer vorteilhaften Ausgestaltung ist vorgesehen, dass die Gehäuseschalen 56, 57 Clipelemente aufweisen, mit denen die Gehäuseschalen 56, 57 miteinander verbindbar sind. In einer vorteilhaften Ausgestaltung ist vorgesehen, dass das Küchengerät 1 elektromotorisch ist, insbesondere ein Stabmixer 2 ist. In einer vorteilhaften Ausgestaltung ist vorgesehen, dass die Gehäuseschalen 56, 57 im Wesentlichen als Halbschalen ausgebildet sind. In einer vorteilhaften Ausgestaltung ist vorgesehen, dass die beiden Befestigungsstellen 62 mindestens 2 cm, insbesondere mindestens 3 cm, vorzugsweise mindestens 4 cm, voneinander beabstandet sind.

Ein besonders vorteilhaftes Verfahren zur Herstellung eines Küchengeräts 1, insbesondere Stabmixer 2, das eine erste 56 und eine zweite 57 Gehäuseschale und einen Gehäusespanndeckel 63 aufweist, so dass durch die Gehäuseschalen 56, 57 und den Gehäusespanndeckel 63 ein im Wesentlichen geschlossenes Gehäuse 5 gebildet wird, sieht folgende Verfahrenschritte vor: Zusammensetzen der beiden Gehäuseschalen 56, 57 entlang einer durch die Ränder 66 der Gehäuseschalen 56, 57 gebildeten ersten Verbindungslinie 64; in Eingriff Bringen des Gehäusespanndeckels 63 an mindestens zwei separaten Befestigungsstellen 62 an der ersten Gehäuseschale 56; Zusammenpressen der beiden Gehäuseschalen 56, 57 mit Hilfe des Gehäusespanndeckels 63 derart, dass die erste Gehäuseschale 56 an den beiden Befestigungsstellen 62 gegen die zweite Gehäuseschale 57 gedrückt wird.

Ein besonders vorteilhaftes elektromotorisches Küchengerät 1, insbesondere ein elektromotorisches Handgerät, vorzugsweise ein Stabmixer 2, mit einem Einschalter 67 sieht vor, dass eine fingerbetätigbare elektrische Verriegelung 68 für den Einschalter 67 vorgesehen ist. Fingerbetätigbar heiß, dass die Verriegelung geeignet und dafür bestimmt ist, manuell durch einen Finger entriegelt zu werden. In einer vorteilhaften Ausgestaltung ist vorgesehen, dass die Verriegelung 68 einen von dem Einschalter 67 separaten Sicherheitsschalter 69 aufweist. In einer vorteilhaften Ausgestaltung ist vorgesehen, dass ein betätigungswirksamer Abstand D zwischen dem Einschalter 67 und dem Sicherheitsschalter 69 mindestens 0,5 cm, insbesondere mindestens 0,8 cm, vorzugsweise mindestens 1,2 cm, beträgt, und insbesondere weniger als 4 cm, insbesondere weniger als 3 cm, vorzugsweise weniger als 2.5 cm, beträgt. In einer vorteilhaften Ausgestaltung ist vorgesehen, dass die Verriegelung 68 eine Zeitintegrationsschaltung 70 aufweist, mit welcher der Einschalter 67 erst zeitverzögert nach Betätigen des Sicherheitsschalters 69 entriegelt wird. In einer vorteilhaften Ausgestaltung ist vorgesehen, dass die Zeitverzögerung der Zeitintegrationsschaltung 70 eine Dauer von mindestens 0.1 s, insbesondere mindestens 0.2 s, vorzugsweise mindestens 0.3 s, hat. In einer vorteilhaften Ausgestaltung ist vorgesehen, dass die Verriegelung 68 eine Zeitintegrationsschaltung 70 aufweist, mit welcher der Einschalter 67 erst zeitverzögert nach Betätigen des Sicherheitsschalters 69 für ein vorgegebenes Zeitfenster entriegelt wird. In einer vorteilhaften Ausgestaltung ist vorgesehen, dass die Dauer des Zeitfensters in einem Bereich von 0.3 s bis 2 s, insbesondere in einem Bereich von 0.5 bis 1 s, liegt. In einer vorteilhaften Ausgestaltung ist vorgesehen, dass ein weiteres elektrisches Betätigungsmittel 71, insbesondere ein elektrischer Stufenschalter, zum Einstellen einer elektrischen Leistungsstufe des Küchengeräts 1 vorgesehen ist, wobei das Betätigungsmittel 71 insbesondere an dem, insbesondere zusammen und in Verbindung mit dem, Einschalter 67 vorgesehen ist. In einer vorteilhaften Ausgestaltung ist vorgesehen, dass der Sicherheitsschalter 69 nur eingeschaltet bleibt, solange er betätigt, insbesondere gedrückt, ist, und sonst wieder ausschaltet.

In einer vorteilhaften Ausgestaltung ist vorgesehen, dass der Einschalter 67 entriegelt wird, wenn der Einschalter 67 erst nach Betätigen des Sicherheitsschalters 69 betätigt wird, insbesondere zeitverzögert um eine Dauer von mindestens 0.1 s, insbesondere mindestens 0.2 s, vorzugsweise mindestens 0.3 s. In einer vorteilhaften Ausgestaltung ist vorgesehen, dass die Entriegelung nur für die Dauer eines vorgegebenen Zeitfensters in einem Bereich von 0.3 s bis 2 s, insbesondere in einem Bereich von 0.5 s bis 1 s, wirksam ist. In einer vorteilhaften Ausgestaltung ist vorgesehen, dass der Einschalter 67 nur während des Haltens des Sicherheitsschalters 69 entriegelt werden kann. In einer vorteilhaften Ausgestaltung ist vorgesehen, dass der Einschalter 67 nach erfolgter Entriegelung auch dann eingeschaltet bleibt wenn der Sicherheitsschalter 69 nicht mehr gehalten wird.

Die Erfindung zeichnet sich dadurch aus, dass durch die manuelle Betätigung zweier separater Schalter die Wahrscheinlichkeit eines unbeabsichtigten Betriebs des elektromotorischen Küchengeräts 1 reduziert wird, wodurch die Sicherheit des elektromotorischen Küchengeräts 1 im Haushalt erheblich erhöht wird.

### Bezugszeichenliste

- 1: Küchengerät
- 2: Stabmixer
- 3: Ladesystem
- 4: Halter
- 5: Gehäuse
- 6: Akkumulator
- 7: Sicherheitseinrichtung
- 8: Ladestation
- 9: Kupplung
- 10: erster Schleifkontakt
- 11: zweiter Schleifkontakt
- 12: Drehwinkel
- 13: erster Schleifer
- 14: zweiter Schleifer
- 15: erster Schleifring
- 16: zweiter Schleifring
- 17: Werkzeug
- 18: Werkzeugaufnahme
- 19: Durchführung
- 20: Längsachse
- 21: Befestigungsbeine
- 22: Federelemente
- 23: Standfläche
- 24: Befestigungsfläche
- 25: Temperatursensor
- 26: Regelungseinrichtung
- 27: Ladezustandsanzeige
- 28: LED-Anzeige
- 29: Wandung
- 30: Wand
- 31: Oberfläche
- 32: elektrische Leitungen
- 33: Kontaktflächen
- 34: Aufnahmeboden
- 35: Wellungen
- 36: radialer Spalt
- 37: Montageplatte
- 38: Montageplattennut
- 39: Montageplattenfeder
- 40: Anordnung
- 41: erstes Langloch
- 42: zweites Langloch
- 43: Schraube
- 44: Gummifüße
- 45: Kontur
- 46: Werkzeugkopf
- 47: Motor
- 48: Vormontageträger
- 49: Rastelemente
- 50: Gegenelemente
- 51: Steuerungselektronik
- 52: erste Rastmittel
- 53: zweite Rastmittel
- 54: Stützen
- 55: Schraubbefestigungsmittel
- 56: erste Gehäuseschale
- 57: zweite Gehäuseschale
- 58: Gehäusenut
- 59: Gehäusefeder
- 60: Befestigungsmittel
- 61: Spannelement
- 62: Befestigungsstellen
- 63: Gehäusespanndeckel
- 64: erste Verbindungslinie
- 65: zweite Verbindungslinie
- 66: Ränder
- 67: Einschalter
- 68: elektrische Verriegelung
- 69: Sicherheitsschalter
- 70: Zeitintegrationsschaltung
- 71: Betätigungsmittel
- 72: Bajonettverschluss
- 73: Lichtleiter
- 74: Rastelement
- 75: Rotor
- 76: Welle
- 77: Kontaktbein
- 78: Platin
- 79: erstes Verbindungselement

- 80: zweites Verbindungselement
- 81: drittes Verbindungselement
- 82: Verbindungsvorsprung
- 83: Verbindungsaufnahme
- 84: viertes Verbindungselement
- 85: Schraubverbindung
- 86: Deckelaufnahme
- 87: Führungsfläche
- 88: Verkupplungsrichtung
- 89: Gummimembran

- D: betätigungswirksamer Abstand
- R1: Radius des ersten Schleifrings 15
- R2: Radius des zweiten Schleifrings 16

## Patentansprüche

1. Elektromotorisches Küchengerät (1), insbesondere ein elektromotorisches Handgerät, vorzugsweise ein Stabmixer (2), mit einem Einschalter (67) **dadurch gekennzeichnet, dass** eine fingerbetätigbare elektrische Verriegelung (68) für den Einschalter (67) vorgesehen ist, wobei die elektrische Verriegelung (68) einen von dem Einschalter (67) separaten, insbesondere in einer Vertiefung angeordneten, manuell betätigbaren Sicherheitsschalter (69) aufweist, wobei die Verriegelung (68) eine Zeitintegrationsschaltung (70) aufweist, mit welcher der Einschalter (67) erst nach längerem ununterbrochenem Betätigen des Sicherheitsschalters (69) entriegelt wird.

2. Küchengerät (1) nach Anspruch 1, **dadurch gekennzeichnet, dass** der Sicherheitsschalter (69) in einer Vertiefung angeordnet ist.

3. Küchengerät (1) nach Anspruch 1, **dadurch gekennzeichnet, dass** ein betätigungswirksamer Abstand (D) zwischen dem Einschalter (67) und dem Sicherheitsschalter (69) mindestens 0,5 cm, insbesondere mindestens 0,8 cm, vorzugsweise mindestens 1,2 cm, beträgt, und insbesondere weniger als 4 cm, insbesondere weniger als 3 cm, vorzugsweise weniger als 2.5 cm, beträgt.

4. Küchengerät (1) nach Anspruch 1, **dadurch gekennzeichnet, dass** die Zeitverzögerung der Zeitintegrationsschaltung (70) eine Dauer von mindestens 0.1 s, insbesondere mindestens 0.2 s, vorzugsweise mindestens 0.3 s, hat.

5. Küchengerät (1) nach einem der Ansprüche 3 oder 4, **dadurch gekennzeichnet, dass** die Verriegelung (68) eine Zeitintegrationsschaltung (70) aufweist, mit welcher der Einschalter (67) erst nach längerem ununterbrochenem Betätigen des Sicherheitsschalters (69) für ein vorgegebenes Zeitfenster entriegelt wird.

6. Küchengerät (1) nach Anspruch 5, **dadurch gekennzeichnet, dass** die Dauer des Zeitfensters in einem Bereich von 0.3 s bis 2 s, insbesondere in einem Bereich von 0.5 bis 1 s, liegt.

7. Küchengerät (1) nach einem der vorherigen Ansprüche, **dadurch gekennzeichnet, dass** ein weiteres elektrisches Betätigungsmittel (71), insbesondere ein elektrischer Stufenschalter, zum Einstellen einer elektrischen Leistungsstufe des Küchengeräts (1) vorgesehen ist, wobei das Betätigungsmittel (71) insbesondere an dem, insbesondere zusammen und in Verbindung mit dem, Einschalter (67) vorgesehen ist.

8. Küchengerät (1) nach einem der vorherigen Ansprüche, **dadurch gekennzeichnet, dass** der Sicherheitsschalter (69) nur eingeschaltet bleibt, solange er betätigt, insbesondere gedrückt, ist, und sonst wieder ausschaltet.

## Claims

1. Electric-motor kitchen appliance (1), in particular an electric-motor handheld appliance, preferably a hand blender (2), with an on/off switch (67) **characterised in that** a finger-actuatable electric locking device (68) is provided for the on/off switch (67), wherein the electric locking device (68) has a manually-actuatable safety switch (69) which is separate from the on/off switch (67) and which is arranged in particular in a recess, wherein the locking device (68) has a time-integration circuit (70), with which the on/off switch (67) is only unlocked after prolonged uninterrupted actuation of the safety switch (69).

2. Kitchen appliance (1) according to claim 1, **characterised in that** the safety switch (69) is arranged in a recess.

3. Kitchen appliance (1) according to claim 1, **characterised in that** an actuation-effective distance (D) between the on/off switch (67) and the safety switch (69) amounts to at least 0.5 cm, in particular at least 0.8 cm, preferably at least 1.2 cm, and in particular amounts to less than 4 cm, in particular less than 3 cm, preferably less than 2.5 cm.

4. Kitchen appliance (1) according to claim 1, **characterised in that** the time delay of the time-integration circuit (70) has a duration of at least 0.1 s, in particular at least 0.2 s, preferably at least 0.3 s.

5. Kitchen appliance (1) according to one of claims 3 or 4, **characterised in that** the locking device (68) exhibits a time-integration circuit (70) with which the on/off switch (67) is only unlocked after prolonged uninterrupted actuation of the safety switch (69) for a preset time window.

6. Kitchen appliance (1) according to claim 5, **characterised in that** the duration of the time window is in a range from 0.3 s to 2 s, in particular in a range from 0.5 to 1 s.

7. Kitchen appliance (1) according to one of the previous claims, **characterised in that** a further electric actuating element (71), in particular an electric step switch, is provided for setting an electric power stage of the kitchen appliance (1), wherein the actuating element (71) is provided in particular on, in particular together and in connection with the on/off switch (67).

8. Kitchen appliance (1) according to one of the previous claims, **characterised in that** the safety switch (69) only remains switched on while it is being actuated, in particular pressed, and otherwise switches off.

## Revendications

1. Appareil de cuisine (1) à moteur électrique, notamment un appareil portatif à moteur électrique, de préférence un mixeur plongeur (2), comprenant un commutateur (67), **caractérisé en ce qu'**un verrouillage électrique (68) actionnable avec le doigt est ménagé pour le commutateur (67), le verrouillage électrique (68) présentant un interrupteur de sécurité (69) séparé du commutateur (67), notamment disposé dans un approfondissement, actionnable manuellement, le verrouillage (68) présentant un circuit d'intégration de temps (70) au moyen duquel le commutateur (67) est déverrouillé seulement après un actionnement ininterrompu pendant une durée assez longue l'interrupteur de sécurité (69).

2. Appareil de cuisine (1) selon la revendication 1, **caractérisé en ce que** l'interrupteur de sécurité (69) est disposé dans un approfondissement.

3. Appareil de cuisine (1) selon la revendication 1, **caractérisé en ce qu'**un écart (D), efficace quant à la commande, entre le commutateur (67) et l'interrupteur de sécurité (69) est d'au moins 0,5 cm, notamment d'au moins 0,8 cm, de préférence d'au moins 1,2 cm, et qu'il est notamment inférieur à 4 cm, notamment inférieur à 3 cm, de préférence inférieur à 2,5 cm.

4. Appareil de cuisine (1) selon la revendication 1, **caractérisé en ce que** la temporisation du circuit d'intégration de temps (70) a une durée d'au moins 0,1 s, notamment d'au moins 0,2 s, de préférence d'au moins 0,3 s.

5. Appareil de cuisine (1) selon l'une quelconque des revendications 3 ou 4, **caractérisé en ce que** le verrouillage (68) présente un circuit d'intégration de temps (70), au moyen duquel le commutateur (67) est déverrouillé pour une fenêtre de temps prédéfinie seulement après un actionnement, ininterrompu pendant une durée assez longue, de l'interrupteur de sécurité (69).

6. Appareil de cuisine (1) selon la revendication 5, **caractérisé en ce que** la durée de la fenêtre de temps se situe dans une plage de 0,3 s à 2 s, notamment dans une plage de 0,5 à 1 s.

7. Appareil de cuisine (1) selon l'une quelconque des revendications précédentes, **caractérisé en ce qu'**un moyen supplémentaire de commande électrique (71), notamment un commutateur à gradins électrique, est ménagé pour le réglage d'un étage de puissance électrique de l'appareil de cuisine (1), le moyen de commande (71) étant notamment ménagé sur le commutateur (67), notamment ensemble avec le commutateur (67) et en liaison avec le commutateur (67).

8. Appareil de cuisine (1) selon l'une quelconque des revendications précédentes, **caractérisé en ce que** l'interrupteur de sécurité (69) reste en circuit seulement tant qu'il est actionné, notamment pressé, et **en ce qu'**il est sinon de nouveau mis hors circuit.
